# EUROPÄISCHE PATENTSCHRIFT

(11) **EP 2 490 855 B1**
(45) Veröffentlichungstag und Bekanntmachung des Hinweises auf die Patenterteilung: **10.05.2017**
(21) Anmeldenummer: 10779227.7
(22) Anmeldetag: 22.10.2010
(51) Int. Cl.: B23P 13/00, B23B 35/00, B23B 41/00, B23Q 3/06, B23B 39/16

(54) **BOHRVORRICHTUNG**
DRILLING DEVICE
DISPOSITIF DE PERÇAGE

(30) Priorität: 23.10.2009 DE 102009050476
(43) Veröffentlichungstag der Anmeldung: 29.08.2012
(73) Patentinhaber: Airbus SAS, 31700 Blagnac (FR)
(72) Erfinder: ANTAR, Nebil, 86169 Augsburg (DE); ARENT, Jan-Christoph, 86609 Donauwörth (DE); HECKL, Matthias, 86607 Donauwörth (DE); HÖNLE, Christian, 86650 Wemding (DE)
(74) Vertreter: Marschall, Stefan
(86) Internationale Anmeldenummer: PCT/EP2010/006485
(87) Internationale Veröffentlichungsnummer: WO 2011/047880

(56) Entgegenhaltungen:
- EP-A2- 0 338 117
- DE-A1- 3 503 948
- DE-A1- 4 244 407
- GB-A- 1 187 736
- US-A- 5 127 139
- US-A- 5 542 796
- US-A- 5 836 725
- US-A- 6 141 848
- DATABASE WPI Week 199616 Thomson Scientific, London, GB; AN 1996-158986 XP002622250, -& SU 1 677 946 A1 (ZHDANKO V K) 20. August 1995 (1995-08-20)

## Beschreibung

Die Erfindung betrifft eine Bohrvorrichtung zur Herstellung eines Frachttors mit zueinander fluchtenden Bohrungen.

Frachttore im Flugzeugbau sind häufig in Differentialbauweise hergestellt und weisen zwei Hautfelder auf, zwischen denen eine Versteifungsstruktur aus einer Vielzahl von Spanten und Stringern angeordnet ist. Sie sind häufig im Bereich einer Oberkante um eine Scharnierachse verschenkbar gelagert. Die Verriegelung des Frachttores erfolgt über eine Vielzahl von Haken, die im Bereich einer Unterkante des Frachttores angeordnet sind. Die Verstellung der Haken sowie deren Verriegelung erfolgt über eine Antriebswelle und eine sich parallel zur Antriebswelle erstreckende Sicherungswelle, die jeweils in Spantgabeln geführt sind.

Ein bekanntes Verfahren zur Herstellung eines derartigen Frachttors 2 ist in den Figuren 1 bis 3 gezeigt. Gemäß Fig. 1 werden zuerst die Spanten 4 parallel zueinander angeordnet und die bereits vorhandenen Spantbohrungen 6 incl. Buchsen 8 zueinander fluchtend ausgerichtet. Anschließend wird wie in Figur 2 gezeigt die Versteifungsstruktur 12 auf dem äußeren Hautfelds 14 ausgebildet und mit diesem vernietet. Durch das Vernieten der Einzelteile 4, 8 wird Spannung in das Frachttor 2 eingebracht, sobald dieses Frachttor 2 aus der Vernietungsvorrichtung herausgenommen wird. Das Frachttor 2 verzieht sich, so dass die Spantbohrungen 6 und Buchsen 8 nicht mehr zueinander fluchtend, sondern versetzt zueinander ausgerichtet sind, was wie in Figur 3 gezeigt das Einsetzen einer Antriebswelle 10 in die Buchsen 8 erschwert.

Aus der US 6,141,848 A ist ein Verfahren zur Anordnung von Stringer-Clips, insbesondere in gebogenen Stringerbereichen wie beispielsweise im Heckbereich eines Flugzeugrumpfes bekannt. Die EP 0 338 117 A2 offenbart einen Nietprozess und eine Nietanlage zum computergesteuerten Vernieten von Bauteilen.

Weiterer Stand der Technik ist aus der DE 35 03 948 A1 und der GB 1,187,736 bekannt.

Aufgabe der vorliegenden Erfindung ist es, eine Bohrvorrichtung zur Einbringung von zueinander fluchtenden Bohrungen in ein Frachttor zu schaffen, das die vorgenannten Nachteile beseitigt und die Herstellung von passgenauen Bohrungen erlaubt.

Diese Aufgabe wird gelöst durch eine Bohrvorrichtung mit den Merkmalen des Patentanspruchs 1.

Eine erfindungsgemäße Bohrvorrichtung, insbesondere eine CNCgesteuerte Wellenbohr- und Spindelanlage, hat eine Aufnahmeeinrichtung zur Aufnahme eines Frachttors, insbesondere ein Frachttor eines Luft- und Raumfahrzeugs, mit zumindest einem Bohrkopf zum Einbringen zumindest einer Bohrung in das Frachttor . Erfingdungsgemäß erlaubt die Aufnahmeeinrichtung eine spannungsfreie Lagerung des Frachttors in der Bohrvorrichtung in seiner Einbaulage bzw. in einer einbaulagennahen Position. Hierdurch wird vermieden, dass während des Bohrprozesses ungünstige Spannungen in das Bauteil eingeleitet werden. Dies ist insbesondere dann vorteilhaft, wenn eine Vielzahl von passgenauen fluchtenden Bohrungen in das Frachttor einzubringen ist, die zum Beispiel zur Aufnahme von Wellen oder Achsen dienen. Verformungen bzw. Spannungen des Bauteils aufgrund seiner Gewichtskraft werden erfindungsgemäß beim Bohrprozess berücksichtigt.

Bei einem Ausführungsbeispiel definiert die Aufnahmeeinrichtung eine Schwenkachse zum Verschwenken des Frachttors . Diese verläuft vorzugsweise unterhalb eines Schwerpunktes des aufgenommenen Frachttors, so dass eine Schwenkbewegung des Frachttors um die Schwenkachse selbsttätig über die Gewichtskraft eingeleitet werden kann. Das Frachttor wird quasi vertikal in der Aufnahmeeinrichtung gelagert.

Bei einem Ausführungsbeispiel wird eine Vielzahl von Bohrungspaaren in gabelförmige Frachttorabschnitte eingebracht. Zur Einbringung derartiger Bohrungspaare kann die Bohrvorrichtung einen Bohrkopf aufweisen, der diametral angeordnete Spannelemente zum Einspannen jeweils eines Schneidwerkzeugs aufweist. Zur Verwendung von zwei identischen Schneidwerkzeugen ist es vorteilhaft, wenn der Bohrkopf über eine Drehrichtungsumkehreinheit verfügt.

Die Bohrvorrichtung kann einen zweiten Bearbeitungskopf aufweisen, der unabhängig von dem ersten Bohrkopf ansteuerbar ist. Hierdurch können an dem Frachttor verschiedene Bearbeitungen zeitgleich durchgeführt werden. Vorzugsweise ist der zweite Bearbeitungskopf ebenfalls ein Bohrkopf mit einer Messeinrichtung zur Bestimmung einer Bearbeitungstiefe, so dass es zum Beispiel möglich ist, während des Bohrvorganges eine Senktiefe im Oberflächenbereich zu kontrollieren und den Bohrvorgang bei Erreichen einer Sollsenktiefe automatisch zu beenden. Die Messeinrichtung ermittelt die Senktiefe elektronisch und weist eine Sensorik auf, die einen Stromanstieg eines das Schneidwerkzeug aufnehmenden Spindelantriebs misst. Die Sensorik kann jedoch auch derart ausgeführt sein, dass die Bearbeitungstiefe mittels Körperschall bestimmbar ist. Erfindungsgemäß weist die Bohrvorrichtung eine Halteeinrichtung zur Positionierung von Anbauteilen zum Frachttor auf. Hierdurch ist es möglich, die Anbauteile wie zum Beispiel Scharnierelemente in ihrer Sollposition, d.h., entsprechend der Sollposition einer Scharnierachse zum Frachttor , auszurichten und über notwendige Toleranzkompensationsmaßnahmen wie Adapter und Unterlegscheiben spannungsfrei an dem Frachttor zu befestigen.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:

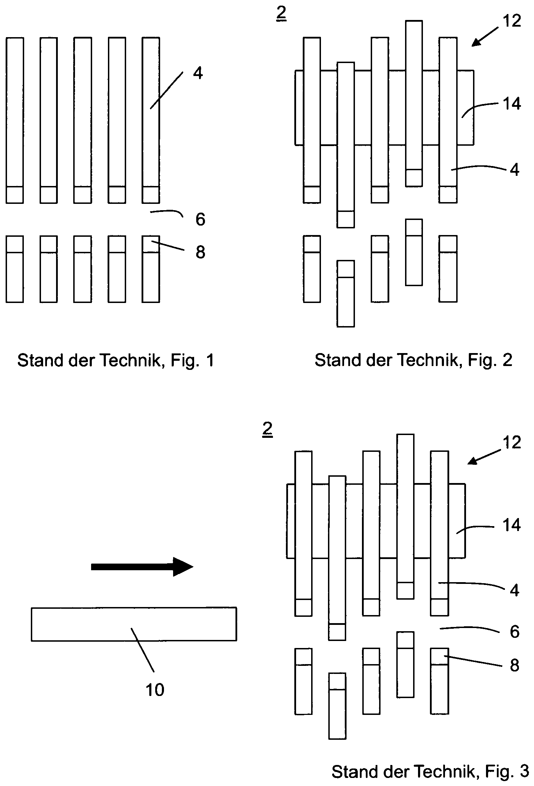

Fig. 1-3 ein bekanntes Verfahren zur Herstellung eines Frachttors,

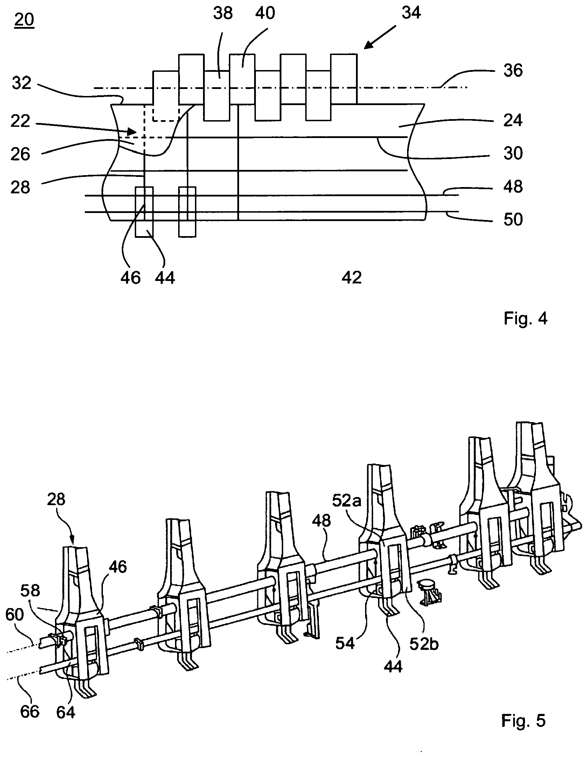

Fig. 4 eine Seitenansicht eines Frachttors,
Fig. 5 eine Kinematik zur Ansteuerung von in Fig. 4 gezeigten Haken,

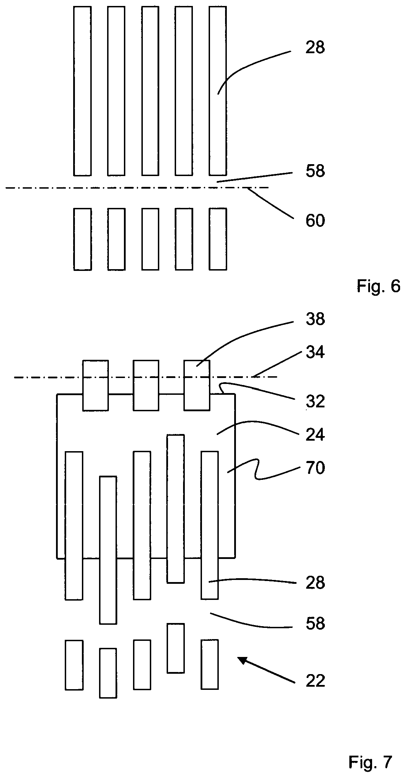

die Fig. 6-9 ein Verfahren zur Herstellung des Frachttors in Fig. 4, und

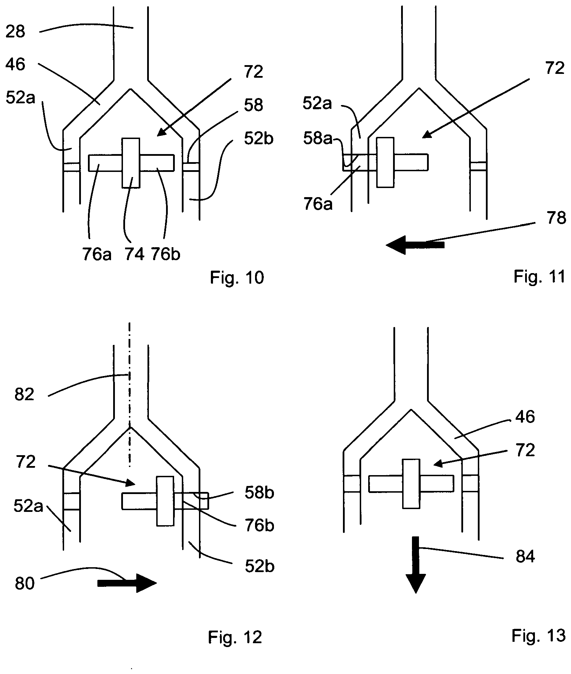

Fig. 10-13 eine erfindungsgemäße Ansteuerung eines Bohrkopfs. In den Figuren tragen gleiche konstruktive Elemente die gleichen Bezugsziffern, wobei bei mehreren gleichen konstruktiven Elementen in einer Figur aus Gründen der Übersichtlichkeit nur einige dieser konstruktiven Elemente mit einem Bezugszeichen versehen sind.

Gemäß der seitlichen Schnittdarstellung nach Fig. 4 weist ein Frachttor 20 eines Flugzeugs eine Versteifungsstruktur 22 auf, die zwischen zwei Hautfeldern 24, 26 angeordnet ist. Die Versteifungsstruktur 22 dient zur Versteifung der Hautfelder 24, 26 bzw. des Frachttors 20 und weist eine Vielzahl von Spanten 28 und eine Vielzahl von Stringern 30 auf. Die Spanten 28 bzw. die Stringer 30 verlaufen in Umfangs- bzw. Längsrichtung des Frachttors 20 und sind jeweils parallel voneinander beabstandet. Das Frachttor 20 ist in einen Rumpfausschnitt des Flugzeugs eingesetzt und im Bereich seiner Oberkante 32 über ein Klavierscharnier 34 verschwenkbar um eine Scharnierachse 36 gelagert. Das Scharnier 34 wird von torseitigen Scharnierelementen 38 sowie von rumpfseitigen Scharnierelementen 40 gebildet, die in Längsrichtung des Frachttores 20 abwechselnd nebeneinander angeordnet sind.

Eine Verriegelung des Frachttores 20 in dem Rumpfausschnitt erfolgt im Bereich einer Unterkante 42 über eine Vielzahl von Haken 44. Die Haken 44 sind jeweils an einen freien Endabschnitt 46 der Spanten 28 angeordnet und über eine sich parallel zur Scharnierachse 36 erstreckende Antriebswelle 48 verstellbar sowie über eine sich parallel zur Antriebswelle 48 erstreckende Sicherungswelle 50 in der verriegelten Position sicherbar.

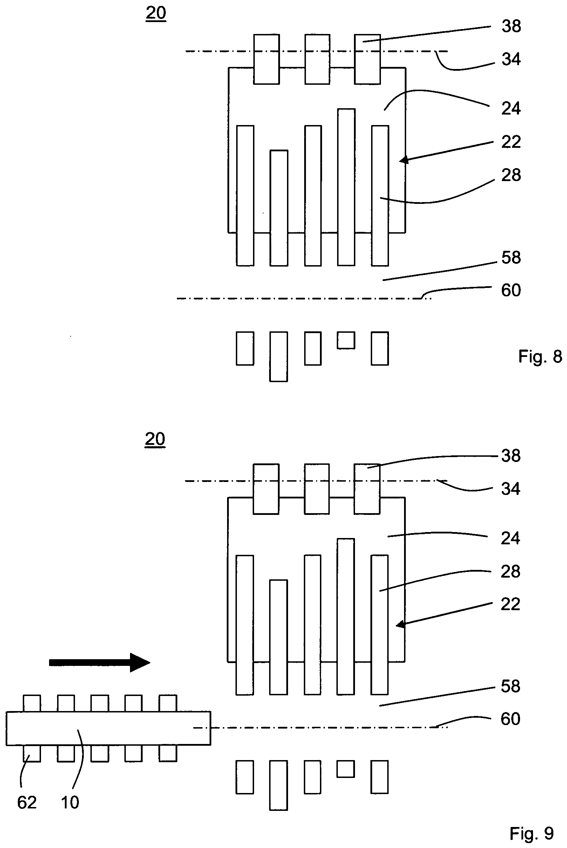

Gemäß der Darstellung in Fig. 5 sind die freien Endabschnitte 46 der Spanten 28 als Spantgabeln mit jeweils zwei voneinander beabstandeten Schenkeln 52a, 52b ausgeführt. Die Haken 44 sind jeweils über einen in ein Hakenbohrungspaar 54 eingesetzten Bolzen (nicht beziffert) verschwenkbar zwischen den Schenkeln 52 gelagert. Die Antriebswelle 48 ist in einem Bohrbild aus einer Vielzahl von zueinander fluchtenden Bohrungen 58 mit einer gemeinsamen Bohrungsachse 60 geführt, die sich ebenfalls durch die Schenkel 52a, 52b erstrecken. Zur Lagerung der Antriebeswelle 48 in den Bohrungen 60 sind entsprechende Buchsen 62 (s. Figur 9) vorgesehen. Die Sicherungswelle 50 ist in einem Bohrbild aus einer Vielzahl von zueinander fluchtenden Bohrungen 64 mit einer gemeinsamen Bohrungsachse 66 geführt, die zwischen den Hakenbohrungen 54 und den Bohrungen 58 für die Antriebswelle 48 angeordnet sind.

Im Folgenden wird ein Verfahren zur Herstellung des Frachttores 20 in Figur 1 erläutert.

Gemäß Fig. 6 werden zuerst die Spanten 28 parallel voneinander beabstandet. Dann werden die Bohrungen 58 für die Antriebswelle 48 und die Bohrungen 64 für die Sicherungswelle 50 (nicht gezeigt in den Figuren 6 bis 13, vgl. Fig. 5) vorgebohrt. Die Vorbohrungen können jedoch auch schon ausgebildet sein bzw. bei kleinen Durchmessern kann ganz auf Vorbohrungen verzichtet werden. Ebenso sind die Hakenbohrungen 54 zur Aufnahme der Hakenbolzen in den Spanten 28 in den Figuren 6 bis 13 nicht gezeigt. Bevorzugterweise werden die Hakenbohrungen 54 vor der Positionierung der Spante 28 nebeneinander in diese eingebracht. Das Vorbohren der Bohrungen 58, 64 erfolgt jeweils über eine durchgehende Spindel, so dass die Bohrungen 58, 64 jeweils zueinander fluchtend mit einer gemeinsamen Längsachse 60, 66 angeordnet sind.

Nach dem Vorbohren der Bohrungen 58, 64 wird die Versteifungsstruktur 22 an dem äußeren Hautfeld 24 aufgebaut und mit diesem verbunden. Anschließend wird das Hautfeld 24 mit der Versteifungsstruktur 22 gerichtet und in seine Sollform bzw. seine Endgeometrie überführt. Als Ergebnis des Richtvorgangs sind wie in Figur 7 gezeigt die Spante 8 derart in Längsrichtung zueinander versetzt angeordnet, dass die vorgebohrten und fluchtenden Bohrungen 58, 64 nun einen deutlichen Bohrungsversatz aufweisen und jeweils keine gemeinsame Bohrungsachse 60, 66 (vgl. Fig. 5 und 6) mehr bilden.

Das über die Verstärkungsstruktur 22 verstärkte und gerichtete Hautfeld 24 bzw. gerichtete Frachttor 20 wird in einer CNCgesteuerten Wellenbohr- und Spindelanlage - im Folgenden Bohrvorrichtung genannt - vertikal positioniert und über seine Hakenbohrungen 54 spannungsfrei in einer Aufnahmeeinrichtung der Bohrvorrichtung verschwenkbar um eine Schwenkachse gelagert, wobei sein Schwerpunkt oberhalb der Schwenkachse angeordnet ist. Dabei simuliert die Schwenkachse die Bolzenachse der Haken 44 (vgl. Fig. 4) Dann wird das das Frachttor 20 in seine Einbaulage bzw. in eine einbaulagennahe Position verschwenkt, die seiner Verriegelungsposition in dem Rumpfausschnitt entspricht. In dieser Position ist das Frachttor 20 strakgenau ausgerichtet und Verformungen, beispielsweise durch die eigene Gewichtskraft, werden im weiteren Verfahren berücksichtigt. Mit anderen Worten, in der simulierten Einbaulage wird das Frachttor 20 im Wesentlichen den Belastungen ausgesetzt, die im eingebauten und geschlossenen Zustand auftreten. Hierdurch werden die Belastungen bereits bei der Ausbildung der Kinematik berücksichtigt und die Bohrungen 58, 64 können entsprechend eingestellt werden.

Anschließend werden wie in Figur 7 gezeigt die torseitigen Scharnierelemente 38 im Bereich der Oberkante 32 an dem Hautfeld 24 befestigt. Die Scharnierelemente 38 wurden bereits zuvor in einer Halteeinrichtung der Bohrvorrichtung entsprechend ihrer Sollposition positioniert. Dabei wird der Abstand bzw. der Verlauf der Scharnierachse 34 in der Bohrvorrichtung zum Frachttor 20 in seiner Einbaulage simuliert und die Scharnierelemente 38 an dieser Scharnierachse 34 zueinander an einer Innenfläche 70 des Frachttor 20 ausgerichtet. Toleranzen zwischen dem Hautfeld 24 und den Scharnierelementen 38 werden über entsprechende Materialstreifen bzw. Unterlegscheiben, Distanzstücke und drgl. ausgeglichen. Dann wird ein CNC-gesteuerter Bohrkopf gegenüber einer von dem Betrachter abgewandten Außenfläche des Hautfelds 24 positioniert und es werden Befestigungslöcher zur Befestigung der Scharnierelemente 38 in das Hautfeld 24 sowie in das jeweilige Scharnierelement 38 eingebracht. Der Bohrkopf kann als ein multifunktionaler Bearbeitungskopf ausgeführt sein, der ebenfalls das Vernieten ermöglicht. Grundsätzlich ist er bei beliebiger Lage des Hautfelds 24 bzw. der Außenfläche einsetzbar.

Die Befestigung der Scharnierelemente 38 an dem Hautfeld 24 erfolgt bevorzugterweise über Nieten, deren Köpfe in entsprechende hautfeldseitige trichterfömige Senkungen eintauchen, so dass eine aerodynamisch günstige Außenfläche geschaffen ist. Die Senkungen werden während des Bohrprozesses ausgebildet, wobei der Bohrkopf mit einer entsprechenden Messeinrichtung zur Messung einer jeweiligen Senktiefe ausgerüstet ist. Die Messeinrichtung weist vorzugsweise eine Sensorik auf, die einen Stromanstieg des Spindelantriebs des Bohrkopfs misst und den Bohrvorgang stoppt, sobald die geforderte Senktiefe erreicht ist. Die Senktiefe kann jedoch auch mittels Körperschall ermittelt werden. Nach dem Bohren der Befestigungslöcher werden diese entsprechend gereinigt und die Scharnierelemente 38 werden über Befestigungsmittel wie Nieten an dem Hautfeld 24 angebunden.

Gleichzeitig zur Ausrichtung und Anbindung der Scharnierelemente 38 werden über einen weiteren CNC-gesteuerter Bohrkopf 72 die Bohrungen 58, 64 jeweils auf ein Endmaß endgebohrt (vgl. Figuren 10 bis 13). Dabei wurde der Vorbohrdurchmesser derart gewählt, dass wie in Figur 8 gezeigt nach dem Endbohren die Bohrungen 58, 64 wieder fluchtend mit jeweils einer gemeinsamen Bohrungsachse 60, 66 ausgerichtet sind. Insbesondere ist das Endmaß der Bohrungen 58, 64 so gewählt, dass wie in Figur 9 gezeigt die Antriebswelle 48 bzw. die Sicherungswelle 50 über Buchsen 62 in den Bohrungen 58, 64 gelagert werden kann. Bevorzugterweise werden die Buchsen 62 wie in Figur 10 gezeigt entsprechend dem Spantabstand auf den Wellen 48, 64 positioniert und dann zusammen als Einheit mit diesen in die Bohrungen 58 eingeführt. Nach dem Ausbilden der zueinander fluchtenden Bohrungen 58, 64 und dem Anschlagen der Scharnierelemente 38 ist die erfindungsgemäße Bearbeitung des Frachttors 20 in der Bohrvorrichtung beendet. Die Kinematik 48, 50 kann montiert und das Frachttor 22 über die Anbindung eines innenseitigen Hautfeldes 26 geschlossen werden (vgl. Fig. 4).

Gemäß Fig. 10 weist der Bohrkopf 72 zumindest zum Endbohren der Bohrungen 58 eine Antriebseinheit 74 mit zwei diametral angeordneten Spannelementen zum Einspannen jeweils eines Bohrers 76a, 76b auf. Die Bohrer 76a, 76b sind identisch ausgebildet, können jedoch auch mit entgegengerichteten Schneiden ausgeführt sein. Zur Drehrichtungsumkehr weist der Bohrkopf 72 eine entsprechende nicht gezeigte Drehrichtungsumkehreinheit auf.

Zum Endbohren wird der Bohrkopf 72 in einer Ausgangslage zwischen den Schenkeln 52a, 52b der jeweiligen Spantgabel 46 angeordnet. Dann wird die Antriebseinheit 74 angesteuert und die Bohrer 76a, 76b werden in Rotation versetzt. Nun wird wie in Figur 11 gezeigt der Bohrkopf 72 aus seiner Ausgangslage gemäß dem Pfeil 78 in Richtung des linken Schenkels 52a bewegt und die Bohrung 58a mit dem linken Bohrer 76a wird in diesem Schenkel 52a endgebohrt.

Nach dem Endbohren der Bohrung 58a in dem linken Schenkel 52a wird die Bohrung 58b in dem rechten Schenkel 52b endgebohrt. Dies geschieht wie in Figur 12 gezeigt über eine Verfahrbewegung des Bohrkopfs 72 gemäß dem Pfeil 80 über seine Ausgangslage hinaus in eine Gegenrichtung zum rechten Schenkel 52b. Sobald der Bohrkopf 72 die Längsachse 78 des Spantes 8 überschritten hat, wird die Drehrichtung der Bohrer 76a, 76b umgesteuert. Nun drehen sich die Bohrer 76a, 76b in die entgegengesetzte Richtung und die Bohrung 58b in dem zweiten Schenkel 52 wird über den rechten Bohrer 76b endgebohrt. Selbstverständlich kann auch zuerst die Bohrung 58b in dem rechten Schenkel 52b und anschließend die Bohrung 58a in dem linken Schenkel 52a endgebohrt werden. Nach dem Endbohren der Bohrung 58b wird der Bohrkopf 72 zurück in seine Ausgangslage bewegt und wie beispielhaft durch Pfeil 84 angedeutet aus der Spantgabel 46 herausgeführt. Dann wird der Bohrkopf 72 in einer benachbarten Spantgabel 46 positioniert und die dortigen Bohrungen 58a, 58b werden entsprechend ausgebildet.

Das Endbohren der Bohrungen 64 für die Sicherungswelle kann über den gleichen Bohrkopf 72 verfügen. Die Bohrvorrichtung kann jedoch auch über zumindest einen zweiten CNC-Bohrkopf mit diametral angeordneten Schneidwerkzeugen verfügen.

### Bezugszeichenliste

- 2: Frachttor
- 4: Spant
- 6: Spantbohrung
- 8: Buchse
- 10: Antriebswelle
- 12: Versteifungsstruktur
- 14: Hautfeld
- 16: Hautfeld
- 20: Frachttor
- 22: Versteifungsstruktur
- 24: Hautfeld
- 26: Hautfeld
- 28: Spant
- 30: Stringer
- 32: Oberkante
- 34: Scharnier
- 36: Scharnierachse
- 38: torseitiges Scharnierelement
- 40: rumpfseitiges Scharnierelement
- 42: Unterkante
- 44: Haken
- 46: Endabschnitt
- 48: Antriebswelle
- 50: Sicherungswelle
- 52: Schenkel
- 54: Hakenbohrung
- 58: Bohrung
- 60: Bohrungsachse
- 62: Buchse
- 64: Bohrung
- 66: Bohrungsachse
- 70: Außenfläche
- 72: Bohrkopf
- 74: Antriebseinheit
- 76: Schneidwerkzeug
- 78: Bewegungsrichtung
- 80: Gegenrichtung
- 82: Längsachse Spant
- 84: Ausrückbewegung

## Patentansprüche

1. Bohrvorrichtung mit einer Aufnahmeeinrichtung zur Aufnahme eines Frachttors (20) eines Luft- und Raumfahrzeugs, mit zumindest einem Bohrkopf (72) zum Einbringen zumindest einer Bohrung (58, 60) in das Frachttor (20), **dadurch gekennzeichnet, dass** die Aufnahmeeinrichtung eine Schwenkachse zum Verschwenken des Frachttors (20) definiert, und eine spannungsfreie die Gewichtskraft berücksichtigende Lagerung des Frachttors (20) in seiner Einbaulage erlaubt und dass eine Halteeinrichtung zur Positionierung von Anbauteilen (38) zum Frachttor (20) in ihrer Sollposition vorgesehen ist.

2. Bohrvorrichtung nach Anspruch 1, wobei das Frachttor (20) im Wesentlichen vertikal positioniert und die Schwenkachse unterhalb eines Schwerpunkts des aufgenommenen Frachttors (20) verläuft.

3. Bohrvorrichtung nach einem der vorhergehenden Anspruche, wobei der Bohrkopf (72) zwei diametral angeordnete Spanneelemente zur Aufnahme jeweils eines Schneidwerkzeugs (76a, 76b) aufweist.

4. Bohrvorrichtung nach Anspruch 3, wobei der Bohrkopf (72) eine Drehrichtungsumkehreinheit aufweist.

5. Bohrvorrichtung nach einem der vorhergehenden Ansprüche, wobei ein zweiter Bearbeitungskopf vorgesehen ist, der unabhängig von dem ersten Bohrkopf (72) ansteuerbar ist.

6. Bohrvorrichtung nach Anspruch 5, wobei der Bearbeitungskopf ein zweiter Bohrkopf zur Aufnahme eines Schneidwerkzeugs (76) ist.

7. Bohrvorrichtung nach Anspruch 6, wobei eine Messeinrichtung zur Bestimmung einer Bearbeitungstiefe zumindest des zweiten Bohrkopfes vorgesehen ist.

8. Bohrvorrichtung nach Anspruch 7, wobei die Messeinrichtung eine Sensorik zur Messung eines Stromanstiegs eines das Schneidwerkzeug (76) aufnehmenden Spindelantriebs (74)aufweist.

9. Bohrvorrichtung nach Anspruch 7, wobei die Messeinrichtung eine Sensorik zur Messung der Bearbeitungstiefe mittels Körperschall aufweist.

## Revendications

1. Dispositif de perçage avec un moyen de réception pour la réception d'une porte de chargement (20) d'un aéronef ou d'un engin spatial, avec au moins une tête de perçage (72) permettant de réaliser au moins un perçage (58, 60) dans la porte de chargement (20), **caractérisé en ce que** le moyen de réception définit un axe de pivotement pour le pivotement de la porte de chargement (20) et permet de supporter sans tensions la porte de chargement (20) dans sa position de montage tout en tenant compte de la pesanteur, et **en ce qu'**il est prévu un moyen de maintien permettant de positionner des pièces de montage (38) par rapport à la porte de chargement (20) dans sa position prescrite.

2. Dispositif de perçage selon la revendication 1, dans lequel la porte de chargement (20) est positionnée essentiellement verticalement, et l'axe de pivotement s'étend en dessous d'un centre de gravité de la porte de chargement (20) reçue.

3. Dispositif de perçage selon l'une des revendications précédentes, dans lequel la tête de perçage (72) présente deux éléments de serrage disposés diamétralement, pour la réception respectivement d'un outil de coupe (76a, 76b).

4. Dispositif de perçage selon la revendication 3, dans lequel la tête de perçage (72) présente une unité d'inversion de direction de rotation.

5. Dispositif de perçage selon l'une des revendications précédentes, dans lequel il est prévu une deuxième tête d'usinage, laquelle peut être actionnée indépendamment de la première tête de perçage (72).

6. Dispositif de perçage selon la revendication 5, dans lequel la tête d'usinage est une deuxième tête de perçage destinée à recevoir un outil de coupe (76).

7. Dispositif de perçage selon la revendication 6, dans lequel il est prévu un dispositif de mesure permettant de déterminer une profondeur d'usinage au moins de la deuxième tête de perçage.

8. Dispositif de perçage selon la revendication 7, dans lequel le dispositif de mesure comporte un système de détection permettant de mesurer une augmentation de courant d'un entraînement à broche (74) recevant l'outil de coupe (76).

9. Dispositif de perçage selon la revendication 7, dans lequel le dispositif de mesure comporte un système de détection permettant de mesurer la profondeur d'usinage à l'aide du bruit structurel.

## Claims

1. A drilling device comprising a receiving unit for receiving a freight door (20) of an aircraft and spacecraft, having at least one drill head (72) for introducing at least one bore (58, 60) into the freight door (20), **characterized in that** the receiving unit defines a pivot axis for pivoting the freight door (20) and allows, while considering the weight, stress-free mounting of the freight door (20) in its installed position, and that a holding fixture is provided for positioning attachment parts (38) with respect to the freight door (20) in their required position.

2. The drilling device according to claim 1, wherein the freight door (20) is substantially positioned vertically and the pivot axis runs below a center of gravity of the received freight door (20).

3. The drilling head according to any one of the preceding claims, wherein the drilling head (72) has two diametrically arranged clamping elements for receiving a cutting tool (76a, 76b) in each case.

4. The drilling device according to claim 3, wherein the drill head (72) has a rotational direction reversal unit.

5. The drilling device according to any one of the preceding claims, wherein a second machining head is provided, which can be activated independently of the first drilling head (72).

6. The drilling device according to claim 5, wherein the machining head is a second drilling head for receiving a cutting tool (76).

7. The drilling device according to claim 6, wherein a measuring device is provided for determining a machining depth of at least the second drilling head.

8. The drilling device according to claim 7, wherein the measuring device has a sensor system for measuring a current increase of a spindle drive (74) receiving the cutting tool (76).

9. The drilling device according to claim 7, wherein the measuring device has a sensor system for measuring the machining depth by means of structure-born sound.
